# EUROPÄISCHE PATENTSCHRIFT

(11) **EP 2 764 757 B1**
(45) Veröffentlichungstag und Bekanntmachung des Hinweises auf die Patenterteilung: **19.08.2020**
(21) Anmeldenummer: 12837801.5
(22) Anmeldetag: 08.10.2012
(51) Int. Cl.: H05B 33/08

(54) **VERFAHREN ZUR ANSTEUERUNG VON EINEM LEUCHTMITTEL**
METHOD FOR ACTIVATING A LIGHT SOURCE
PROCÉDÉ D'ACTIVATION D'UNE SOURCE LUMINEUSE

(30) Priorität: 07.10.2011 AT 5512011 U
(43) Veröffentlichungstag der Anmeldung: 13.08.2014
(73) Patentinhaber: Tridonic GmbH & Co. KG, 6851 Dornbirn (AT)
(72) Erfinder: KEARS, John, Durham, DH7 6RS (GB)
(74) Vertreter: Rupp, Christian
(86) Internationale Anmeldenummer: PCT/AT2012/000252
(87) Internationale Veröffentlichungsnummer: WO 2013/049868

(56) Entgegenhaltungen:
- WO-A1-2010/064915
- US-A1- 2010 271 802
- US-A1- 2011 062 888

## Beschreibung

Die Erfindung betrifft ein Verfahren zur Ansteuerung von einem Leuchtmittel gemäss dem Oberbegriff des Anspruchs 1. Darüber hinaus betrifft die vorliegende Erfindung ein Beleuchtungssystem zur Ansteuerung von wenigstens einem Leuchtmitteln gemäss dem Oberbegriff des Anspruchs 2.

### Technisches Gebiet und Stand der Technik

Lichtsteuer- und Lichtmanagementsysteme haben sich als fester Bestandteil moderner Beleuchtungslösungen etabliert. Betriebsgeräte moderner Bauart wie elektronische Vorschaltgeräte für Gasentladungslampen oder Betriebsgeräte für Leuchtdioden verfügen üblicherweise über Schnittstellen, über die extern Steuerbefehle an das Betriebsgerät übermittelt werden können. So kann durch entsprechende Steuersignale beispielsweise eine gewünschte Leuchtintensität (Dimm-stufe) des Leuchtmittels eingestellt werden.

In der Beleuchtungsindustrie wurden verschiedene Standards für die Steuerung von Betriebsgeräten entwickelt, die sich hinsichtlich ihrer Komplexität unterscheiden. Technologisch am fortschrittlichsten sind digitale Lösungen, wo das Betriebsgerät eine digitale Schnittstelle aufweist, über welche digitale Steuerbefehle von einer Kontrolleinheit zum Betriebsgerät und zurück gesendet werden können.

Die Kommunikation kann dabei bidirektional erfolgen, d.h. das Betriebsgerät kann nicht nur Empfänger von Signalbefehlen sein, sondern auch als Sender von Signalen agieren. So kann beispielsweise das Betriebsgerät aktiv einen Statusbericht an die Kontrolleinheit rückmelden, wenn ein Fehler auftritt.

Für die Übermittlung der Signale sind aus dem Stand der Technik unterschiedlichste Wege bekannt: So ist drahtgebundene Übermittlung (beispielsweise durch Nutzung der Spannungsversorgungsleitung (Powerline) oder Verwendung eines von der Spannungsversorgungsleitung separaten Leitungspaares) und drahtungebundene Übermittlung (bspw. Funk, Infrarot) möglich.

Als Beispiel für die Steuerung von Betriebsgeräten sei auf die sogenannte DSI-Technologie (Digital Serial Interface) und das sogenannte DALI-protokoll (digital adressable lighting interface) verwiesen. Im DALI-standard wird ein umfangreicher digitaler Steuerbefehlssatz zur Kommunikation mit dem Betriebsgerät zur Verfügung gestellt. In einem DALI-konformen Beleuchtungssystem sind neben dem Betriebsgerät mit digitaler Schnittstelle eine zugehörige Buseinrichtung einschließlich einer digitalen Kontrolleinheit notwendig.

In vielen Fällen wünscht der Anwender eine weniger aufwendige Technologie, die etwas günstiger ist, aber nichtsdestotrotz die wesentlichen Funktionalitäten zur Verfügung stellt.

So sind aus dem Stand der Technik auch Betriebsgeräte bekannt, bei denen an der digitalen Schnittstelle (Steuereingang) wahlweise ein Digitalsignal oder ein mittels eines mit Netzspannung versorgten Tasters erzeugtes Signal angelegt werden kann. Möchte der Anwender die digitale Peripherie nicht verwenden, so kann optional der Digitalsteuereingang des Betriebsgeräts mittels Tasterbetätigung angesteuert werden.

Dabei werden beispielsweise die Zeitdauer sowie die Wiederholrate der Tasterbetätigung als Signal zum Ein- und/oder Ausschalten oder zur Helligkeitsregelung (Dimmen) ausgewertet. Ein Beispiel für ein derartiges Betriebsgerät, an dessen digitalen Steuereingang ein mittels eines mit Netzspannung versorgten Tasters oder Schalters generiertes Signal anliegt, ist beispielsweise in DE 297 24 657 offenbart.

US 2010/271802 A1 zeigt eine LED-Leuchte mit unterbrechungsfreier Energieversorgung. Dabei weist die LED-Leuchte insbesondere eine Batterie auf, welche bei Verfügbarkeit von Netzspannung geladen wird, und welche bei mangelnder Verfügbarkeit von Netzspannung die Leuchte mit Energie versorgt.

Eine Anwendung für die Steuerung des Betriebsgeräts mittels Tasterbetätigung ist bei anwesenheitsgesteuerten Lichtlösungen gegeben, wo das Betriebsgerät durch einen an den Digitalsteuereingang angeschlossenen Bewegungsmelder gesteuert wird. Solche Betriebsgeräte, die an ein oder mehrere Bewegungsmelder angeschlossen sind, sind beispielsweise in Treppenhäusern, langen Korridoren, Tiefgaragen, Fußgängerunterführungen oder in U-Bahnhöfen im Einsatz. Wird durch einen Bewegungsmelder eine Bewegung beispielsweise aufgrund der Anwesenheit einer Person erfasst, so sorgt das Betriebsgerät dafür, dass der entsprechende Raumbereich durch das Leuchtmittel mit einer gewünschten Helligkeit (Betriebssollwert) ausgeleuchtet wird. Bei Fehlen einer Bewegung (Abwesenheit) wird das Leuchtmittel auf einen Ruhewert gedimmt.

Bei Betriebsgeräten des Stands der Technik wird ein Bewegungsmelder an den Digitalsteuereingang angeschlossen und diese Betriebsgeräte verfügen nur über ein abgelegtes Dimm-szenario, die Festlegung des Dimm-szenarios mit den einzelnen Dimm-parametern erfolgt während der Fertigung des Betriebsgeräts oder bei der Installation kurz vor Inbetriebnahme, beispielsweise mittels Programmierung, und kann im Betrieb nicht verändert werden.

Ein Dimm-szenario bestimmt, wie der Wechsel zwischen den Dimm-stufen erfolgen kann. Anstatt abrupt zwischen den Dimm-stufen zu schalten, kann das Betriebsgerät so eingestellt sein, dass der Wechsel zwischen den Dimm-stufen während einer bestimmten Zeitdauer (fade-on bzw fade-off-Zeit) geschieht.

Die Festlegung eines Dimm-szenarios mit geeigneten Werten für die Dimm-stufen, fade-on und fade-off-Zeiten erweist sich in der Praxis als nicht einfach, da das Schaltverhalten des Betriebsgeräts stark von der jeweiligen spezifischen Anwendung abhängen kann.

So ist in Krankenhausfluren beispielsweise durch Normen vorgeschrieben, dass eine gewisse Resthelligkeit auch nachts immer vorhanden sein muss, auch wenn über eine gewisse Zeitperiode hinweg keine Bewegung mehr detektiert wurde. Dem gegenüber kann in einem Treppenhaus einer privaten Wohnanlage nachts relativ rasch die Beleuchtung abgeschaltet werden, nachdem wieder 'Ruhe eingekehrt ist'.

Die zeitliche Häufigkeit, mit der eine Bewegungserkennung auftritt, und die Zeitdauer zwischen zwei aufeinanderfolgenden Bewegungserkennungen können stark variieren:
Der Bewegungsmelder in einer Tiefgarage spricht in 'Stosszeiten' sehr häufig an, wenn die Tiefgarage stark frequentiert ist (beispielsweise morgens zu Arbeitbeginn und abends zu Arbeitsende), während in ruhigeren Zeiten beispielsweise in den tiefen Nachstunden relativ selten ein Bewegungssignal ausgelöst wird.

Bei Einstellung des Dimm-szenarios sollen nun vorrangig zwei Aspekte berücksichtigt werden: Zum einen, um möglichst viel an Energie zu sparen, sollen die Leuchtmittel möglichst kurze Zeit und nur wenn sie wirklich notwendig sind in Betrieb sein. Zum anderen sollen rasch aufeinanderfolgende Ein- und Ausschaltvorgänge mit kurzer Ein- und Ausschaltdauer vermieden werden, da sich dies lebenszeitverkürzend auf das Leuchtmittel auswirken kann.

Bei bestimmten Leuchtmitteln wie beispielsweise Hochdruckgasentladungslampen ist zudem ein rasch aufeinanderfolgendes Aus- und Wiedereinschalten gar nicht möglich, da die Lampe zuerst abkühlen muss, bevor sie wiedergezündet werden kann. Es besteht auch ein Unterschied bei den verschiedenen Leuchtmitteln hinsichtlich ihrer Energiebilanz bei unterschiedlichen Helligkeiten. Beispielsweise kann eine Hochdruckgasentladungslampe sehr effektiv bei hoher Helligkeit betrieben werden, während Leuchtdioden auch bei sehr geringen Helligkeiten eine hohe Effizienz aufweisen. Diese Betrachtung beinhaltet auch die erforderliche Ansteuerung. Beispielsweise ist beim Dimmen von Leuchtstofflampen eine Zuheizung der Wendeln erforderlich.

Zur Beleuchtung werden anstelle von zentralversorgten Notbeleuchtungssysteme immer häufiger Einzelbatteriesysteme eingesetzt. Zudem werden durch die neuen Leuchtmittel wie Leuchtdioden als Lichtquelle immer kompakter, so dass es gilt, auch einen möglichst kompakten Aufbau für die Notbeleuchtungssysteme zu finden.

### Darstellung der Erfindung

Die Aufgabe der Erfindung ist, die Ansteuerung von Betriebsgeräten zu verbessern. Es soll im speziellen den Anforderungen Energieeffizienz und Schonung des Leuchtmittels Rechnung getragen werden.

Die genannte Aufgabe der Erfindung wird durch die Merkmale der unabhängigen Ansprüche gelöst. Die abhängigen Ansprüche bilden den zentralen Gedanken in besonders vorteilhafter Weise weiter.

Die Erfindung bezieht sich auf ein Verfahren zur Ansteuerung von einem Leuchtmittel, wobei
- das Leuchtmittel zumindest zwei unabhängig voneinander ansteuerbare Leuchtdioden aufweist,
- die zwei unabhängig voneinander ansteuerbaren Leuchtdioden von jeweils einem Betriebsgerät betrieben werden,
- eine erste Leuchtdiode im Falle eines Netzspannungsausfalls durch das erste Betriebsgerät ausgehend von einer wiederaufladbaren Batterie angesteuert wird,
- wobei die zweite Leuchtdiode von dem zweiten Betriebsgerät angesteuert wird, wenn das zweite Betriebsgerät durch einen schaltbaren Bewegungsmelder mit der Netzspannungsversorgung verbunden wird.

Die Erfindung bezieht sich auch auf ein Beleuchtungssystem zur Ansteuerung von einem Leuchtmittel, wobei
- das Leuchtmittel zumindest zwei unabhängig voneinander ansteuerbare Leuchtdioden aufweist,
- die zwei unabhängig voneinander ansteuerbaren Leuchtdioden von jeweils einem Betriebsgerät betrieben werden,
- das erste Betriebsgerät über eine wiederaufladbare Batterie verfügt und zumindest im Falle eines Netzspannungsausfalls eine Leuchtdiode ansteuert,
- wobei das zweite Betriebsgerät über einen schaltbaren Bewegungsmelder mit der Netzspannungsversorgung verbunden ist.

Erfindungsgemäß wird ein Verfahren zur Ansteuerung von elektronisch gesteuerten Betriebsgeräten vorgeschlagen. Typische Beispiele für ein derartiges Betriebsgerät sind Betriebsgeräte (Treiber) für organische oder anorganische Leuchtdioden.

Die Erfindung bezieht sich auch auf ein Betriebsgerät für Leuchtmittel, das zur Durchführung eines derartigen Verfahrens ausgelegt ist.

Die Erfindung bezieht sich auch auf ein Beleuchtungssystem zur Ansteuerung von elektronisch gesteuerten Betriebsgeräten, wobei das Beleuchtungssystem wenigstens zwei Betriebsgeräte und wenigstens einen Bewegungsmelder aufweist.
Weitere Vorteile, Merkmale und Eigenschaften der vorliegenden Erfindung sollen nunmehr Bezug nehmend auf die beiden beigefügten Abbildungen erläutert werden.

Fig. 1 zeigt eine Anordnung von einem Betriebsgerät 2b mit einem Bewegungsmelder 1 und ein Betriebsgerät 2a.

Fig. 2 zeigt den zeitlichen Verlauf der Ansteuerung des Leuchtmittels 6.

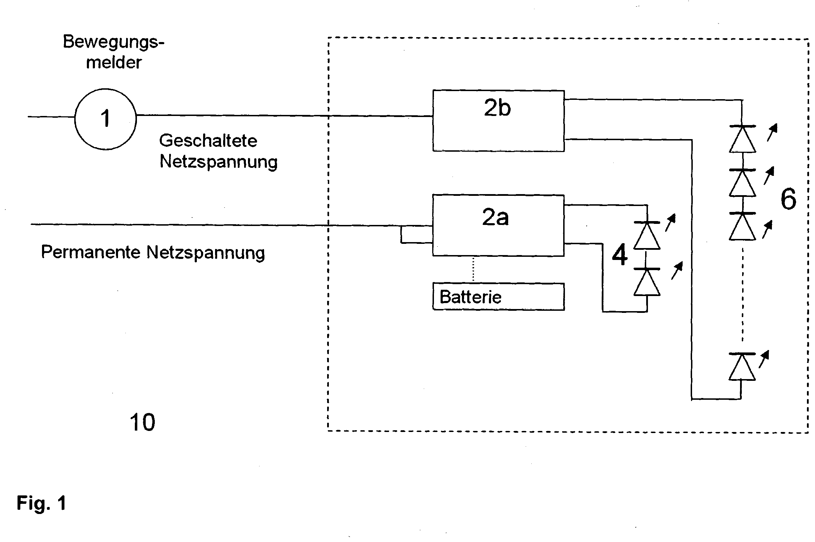

Abbildung 1 zeigt in schematischer Darstellung ein Beleuchtungssystem 10 aufweisend ein erstes (elektronisches) Betriebsgerät 2a, welches mit einer wiederaufladbaren Batterie ('Batterie') verbunden ist sowie ein an dessen Ausgang angeschlossenes Leuchtmittel 4, einen bekannten Bewegungsmelder 1, ein zweites (elektronisches) Betriebsgerät 2b, sowie ein an dessen Ausgang angeschlossenes Leuchtmittel 6.

Beim Leuchtmittel 4 kann es sich prinzipiell um jedes beliebige Leuchtmittel handeln, so beispielsweise um Gasentladungslampen oder um organische bzw. anorganische Leuchtdioden. Beim Leuchtmittel 6 kann es sich prinzipiell um jedes beliebige Leuchtmittel handeln, so beispielsweise um organische bzw. anorganische Leuchtdioden um oder Gasentladungslampen. Vorteilhafterweise sind die beiden Leuchtmittel 4 und 6 als Leuchtdiode ausgebildet.

Das dargestellte Betriebsgerät 2b verfügt über Anschlüsse L, N, die mit Netzspannungsversorgung kontaktierbar sind.

Zwischen einem Netzanschluß des Betriebsgeräts 2b ist ein handelsüblicher Bewegungsmelder 1 geschaltet.
Am Netzeingang des Betriebsgeräts 2b können nun im wesentlichen zwei unterschiedliche Spannungen anliegen, nämlich die Netzspannung bei Erfassung einer Bewegung durch den Bewegungsmelder 1 sowie keine Netzspannung (vorzugsweise 0V) für den Fall, das keine Bewegung am Bewegungsmelder 1 detektiert wird.

Im dargestellten Beispiel liegt folgende Definition vor: Erfasst der Bewegungsmelder 1 eine Bewegung, so schließt dieser die Verbindung zwischen dem Phasenleiter L und dem Netzanschluß des Betriebsgeräts 2b kurz, sodass am Netzanschluß des Betriebsgeräts 2b der Spannungspegel des Phasenleiters L anliegt.

Im anderen Fall, wenn der Bewegungsmelder 1 keine Bewegung detektiert, wird die Verbindung zwischen Phasenleiter L und dem Netzanschluß des Betriebsgeräts 2b unterbrochen, sodass am Netzanschluß des Betriebsgeräts 2b keine Spannung anliegt. Es sind natürlich andere Definitionen bzw. Kodierungen des Bewegungssignals möglich. Der Bewegungsmelder kann beispielsweise einen PIR (Passiver Infrarotsensor) oder ein Ultraschallsenor zu Bewegungs- oder Anwesenheitserkennung aufweisen und ausgehend von dieser Erkennung die Netzspannung durchschalten.

Das Betriebsgerät 2a für zumindest ein Leuchtmittel enthält mindestens eine Betriebsschaltung für ein Leuchtmittel 4. Das Betriebsgerät 2a weist Eingänge zur Versorgung der Betriebsschaltung mit Energie auf (zum Anschluß an eine Netzspannung) und Ausgänge zum Anschließen des Leuchtmittels 4. Das Betriebsgerät 2a kann die Funktion eines Notbetriebsgerätes übernehmen.
Die Betriebsschaltung kann einen Eingangsfilter und einen Gleichrichter sowie einen Kondensator zur Aufnahme und Zwischenspeicherung der Energie aus der Netzspannung enthalten. Es kann optional auch eine Schaltung zur aktiven Leistungsfaktorkorrektur wie beispielsweise ein Boost - oder Flyback PFC vorhanden sein. Aus dem Kondensator kann die zwischengespeicherte Energie zum Betreiben des angeschlossenen Leuchtmittels 4 genutzt werden. Die Betriebsschaltung kann eine Treiberschaltung zur Ansteuerung eines Leuchtmittels 4 enthalten. Beispielsweise kann über einen Schaltregler wie einen Buck-Converter ein Leuchtmittel 4 angesteuert werden. Es sind aber auch andere Schaltreglertopologien wie beispielsweise ein Flyback-Converter, ein Boost Converter oder ein Buck-Boost Converter möglich.

Die Betriebsschaltung des Betriebsgerätes 2a kann eine Batterieladeschaltung enthalten und mit einer Batterie verbunden sein und im Falle eines Wegfalls der Versorgungsspannung an den Eingängen zur Versorgung der ersten Betriebsschaltung den Betrieb des angeschlossenen Leuchtmittels 4 übernehmen, wobei die Betriebsschaltung in diesem Fall aus der Batterie versorgt wird. Vorzugsweise ist eine Batterieentladeschaltung als Treiberschaltung vorhanden, über die das Leuchtmittel 4 angesteuert wird. Die Batterieladeschaltung und die Batterierentladeschaltung können auch in einem bidirektionalen Konverter kombiniert sein.

Vorzugsweise speist das erste Betriebsgerät 2a die erste Leuchtdiode 4 sowohl bei anliegender Netzspannung als auch bei einem Ausfall der Netzspannung.
Bei anliegender Netzspannung wird die wiederaufladbare Batterie aufgeladen und die erste Leuchtdiode 4 ausgehend von der Netzspannung angesteuert. Im Falle eines Ausfalls der Netzspannung (Notlichtsituation) wird die erste Leuchtdiode 4 ausgehend von der wiederaufladbaren Batterie angesteuert.

Das erste Betriebsgerät 2a kann über zwei separate Netzeingänge verfügen. Der erste Netzeingang kann zur Energiespeisung dienen, sowohl zur Aufnahme der Energie für die erste Leuchtdiode 4 als auch für die Aufladung der wiederaufladbaren Batterie. Der zweite Netzeingang kann zur Erkennung eines Netzausfalls dienen.

Es wäre möglich, den ersten Netzeingang über einen Schalter mit dem Netz zu verbinden, während der zweite Netzeingang permanent mit dem Netz verbunden ist. Auf diese Weise kann eine Abschaltung des ersten Betriebsgerätes erreicht werden. Wenn der erste Netzeingang durch den Schalter vom Netz getrennt wird, aber am zweiten Netzeingang noch eine Netzspannung anliegt, kann das Betriebsgerät erkennen, dass kein Ausfall der Netzspannung vorliegt, sondern nur eine Abschaltung (beispielsweise weil keine Beleuchtung erforderlich ist).

Bei einer Ausführung des ersten Betriebsgerätes 2a mit zwei separaten Netzeingängen kann auch der zweite, permanent mit der Netzspannung verbundene Eingang zur Aufladung der wiederaufladbaren Batterie genutzt werden.

Die Betriebsschaltung kann aber auch im Falle des Aufschaltens einer Notbeleuchtungsversorgungsspannung an den Eingängen zur Versorgung der Betriebsschaltung diese Aufschaltung erkennen und den Betrieb des angeschlossenen Leuchtmittels entsprechend anpassen, beispielsweise durch eine Senkung der Helligkeit. Die Betriebsschaltung kann eine Kontrolleinheit enthalten, die wahlweise die Batterieladeschaltung und die Treiberschaltung für das angeschlossene Leuchtmittel 4 steuert und regelt.

Die Betriebsschaltung kann auch auf mehrere Leiterplatten verteilt sein, beispielsweise können die Batterieladeschaltung und die Treiberschaltung für das angeschlossene Leuchtmittel 4 auf getrennten Leiterplatten angeordnet sein.

Eine Leiterplatte kann Anschlußmittel für eine Batterie enthalten. Die Batterie kann in das Betriebsgerät 2a integriert sein oder aber an das Betriebsgerät 2a angeschlossen werden.

Die Batterie kann wiederaufladbar sein. Die wiederaufladbare Batterie kann auch ein Kondensator mit hoher Kapazität wie beispielsweise ein sog. ,Goldcap' sein.

Das Betriebsgerät 2a und zumindest ein Leuchtmittel kann ein Bestandteil einer Notbeleuchtungseinheit sein.

Es ist somit möglich, ein Notbeleuchtungssystem aufzubauen.

Das erste Betriebsgerät 2a kann die Leuchtdioden 4 auch bei Anliegen einer Netzspannung ansteuern.

Das zweite Betriebsgerät 2b kann eine ähnliche Betriebsschaltung wie das erste Betriebsgerät 2a aufweisen, wobei das zweite Betriebsgerät 2b vorzugsweise keine Batterie und auch keine Batterieladeschaltung aufweist.

Das Betriebsgerät 2b oder auch das Betriebsgerät 2a kann darüber hinaus optional über eine Schnittstelle mit den Anschlüssen D1 und D2 verfügen. Diese Anschlüsse D1 und D2 können so ausgelegt sein, dass über diese Anschlüsse dem Betriebsgerät digitale Befehle bspw. gemäß dem DALI-Standardprotokoll übermittelt werden können bzw. das Betriebsgerät digitale Signale abschicken kann. Optional können die beiden Anschlüsse D1 und D2 so ausgebildet sein, dass Signale durch die Versorgungsspannung wie beispielsweise der Netzspannung oder auch Tastersignale übermittelt werden.

Optional können die beiden Anschlüsse D1 und D2 auch so ausgebildet sein, dass analoge Signale wie beispielsweise 1-10V Signale übermittelt werden.

Das Betriebsgerät 2b oder das Betriebsgerät 2a kann weiterhin über eine weitere Schnittstelle mit den Anschlüssen D3 und D4 verfügen. An diese Schnittstelle (D3, D4) kann beispielsweise ein Helligkeitssensor oder anderer Sensor oder aber auch ein Signal eines anderen Betriebsgerätes oder Steuergerätes empfangen werden. Es kann auch möglich sein, dass über diese weitere Schnittstelle (D3, D4) Signale gesendet werden können. Die jeweilige Nutzung bzw. Nutzungsweise dieser weiteren Schnittstelle kann programmierbar sein.

Es kann aber auch möglich sein, an diese Schnittstelle (D3, D4) direkt das weitere Leuchtmittel wie beispielsweise eine Leuchtdiode anzuschließen und anzusteuern. Die Nutzung bzw. Nutzungsweise der weiteren Schnittstelle mit den Anschlüssen D3 und D4 kann wie gesagt programmierbar sein und somit können diese Anschlüsse beispielsweise auch zur Ansteuerung des weiteren Leuchtmittels umprogrammiert werden.

Gemäß der Erfindung wird somit ein Verfahren zur Ansteuerung von einem Leuchtmittel ermöglicht, wobei das Leuchtmittel zumindest zwei unabhängig voneinander ansteuerbare Leuchtdioden 4, 6 aufweist, die zwei unabhängig voneinander ansteuerbaren Leuchtdioden 4, 6 von jeweils einem Betriebsgerät 2a, 2b betrieben werden, das erste Betriebsgerät 2a über eine wiederaufladbare Batterie verfügt und zumindest im Falle eines Netzspannungsausfalls eine Leuchtdiode 4 ansteuert, und wobei das zweite Betriebsgerät 2b über einen schaltbaren Bewegungsmelder mit der Netzspannungsversorgung verbunden ist. Die zwei unabhängig voneinander ansteuerbaren Leuchtdioden 4, 6 werden somit von jeweils einem Betriebsgerät 2a, 2b betrieben. Eine erste Leuchtdiode 4 wird im Falle eines Netzspannungsausfalls durch das erste Betriebsgerät 2a ausgehend von einer wiederaufladbaren Batterie angesteuert. Die zweite Leuchtdiode 6 wird von dem zweiten Betriebsgerät 2b angesteuert, wenn das zweite Betriebsgerät 2b durch einen schaltbaren Bewegungsmelder mit der Netzspannungsversorgung verbunden wird.

Das Beleuchtungssystem 10 kann zur Ansteuerung von einem Leuchtmittel dienen, wobei das Leuchtmittel zumindest zwei unabhängig voneinander ansteuerbare Leuchtdioden 4, 6 aufweist, die zwei unabhängig voneinander ansteuerbaren Leuchtdioden 4, 6 von jeweils einem Betriebsgerät 2a, 2b betrieben werden, das erste Betriebsgerät 2a über eine wiederaufladbare Batterie verfügt und zumindest im Falle eines Netzspannungsausfalls eine Leuchtdiode 4 ansteuert, und wobei das zweite Betriebsgerät 2b über einen schaltbaren Bewegungsmelder mit der Netzspannungsversorgung verbunden ist.

Die Leuchtmittel 4, 6 können sich durch ihr Lichtspektrum und/oder ihre Eigenschaften hinsichtlich Dynamik oder Lebensdauer unterscheiden.

Bei einem Leuchtmittel 4 kann es sich um vorzugsweise um eine Leuchtdiode oder aber auch um eine Gasentladungslampe (Fluoreszenzlampe, Hochdruckgasentladungslampe) und bei dem weiteren Leuchtmittel 6 um eine organische oder anorganische Leuchtdiode (LED) handeln.

Die beiden Leuchtmittel 4, 6 können innerhalb einer Leuchte angeordnet sein.

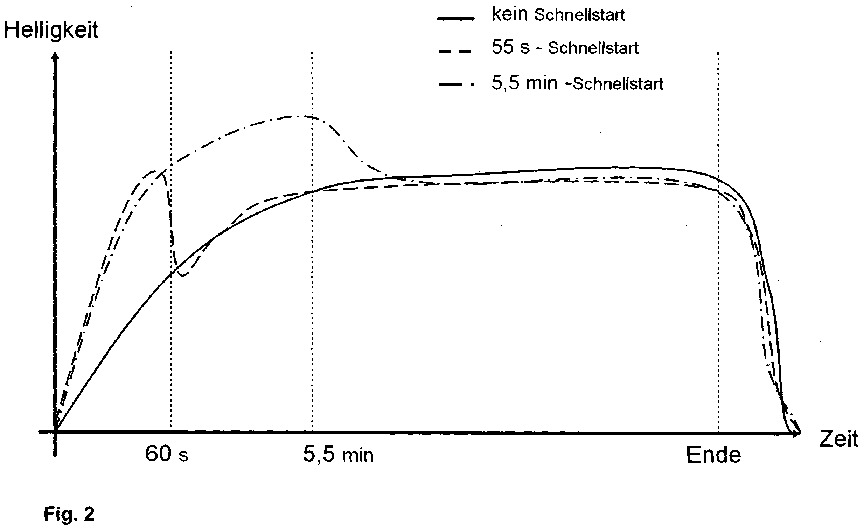

Ein möglicher zeitlicher Verlauf der am Ausgang des Betriebsgerätes 2b anliegenden Spannung zur Speisung der Leuchtdioden 6 ist in der Fig. 2 dargestellt. Der Verlauf der Spannung zur Speisung der Leuchtdioden 6 kann angepasst werden.

Wird eine Bewegung durch den Bewegungsmelder erfasst, so liegt in diesem Beispiel die volle Netzversorgungsspannung am Netzanschluß des Betriebsgeräts 2b an, detektiert der Bewegungsmelder 1 hingegen keine Bewegung, so liegt am Netzanschluß des Betriebsgeräts 2b keine Spannung an.

Optional kann der Bewegungsmelder 1 so ausgeführt sein, dass nach Wegfall einer Bewegung die Spannung am Netzanschluß des Betriebsgeräts 2b nicht sofort abfällt, sondern noch eine bestimmte Zeitdauer (Verzögerungszeit) die Netzversorgungsspannung am Netzanschluß des Betriebsgeräts 2b aufrecht erhalten wird. Diese Zeitdauer (Verzögerungszeit) kann gegebenenfalls am Bewegungsmelder 1 einstellbar sein.

Die Fig. 2 zeigt die Ansteuerung der Leuchtdioden 6 durch das Betriebsgerät 2b und dient zur Erläuterung des möglichen Verlaufs der Ansteuerung der Leuchtdioden 6. Liegt nun an dem Netzanschluß des Betriebsgeräts 2b die Netzversorgungsspannung an (d.h. eine Bewegung wird erfasst), so steuert das Betriebsgerät 2b die Leuchtdioden mit der vorgegebenen Lichtleistung für den Normalbetrieb sofort an (Kein Schnellstart). Aufgrund der internen Bauteile des Betriebsgerätes 2b und eventuell auch aufgrund des angeschlossenen Leuchtmittels 6 ergibt sich eine Hochlaufphase, bis die nominale Lichtleistung wirklich erreicht ist (es können Verzögerungen bspw. wegen der erforderlichen Aufladung von Kondensatoren entstehen). Es ist aber auch möglich, dass die Leuchtdioden 6 kurzzeitig mit einer höheren Leistung als der Leistung der für den Normalbetrieb vorgegebenen Lichtleistung ansteuert.
Die Nominalleistung kann in diesem Fall erst nach einer bestimmten, vorgegebenen Zeitspanne angesteuert werden. Im vorliegenden Beispiel ist diese vorgegebene Zeitspanne 55 Sekunden oder 5,5 Minuten lang (55s Schnellstart, 5,5 min Schnellstart).
Ändert sich nun die Spannung an dem Netzanschluß des Betriebsgeräts 2b auf Null (durch Öffnen des Bewegungsmelders 1), so erfolgt eine Abschaltung der Leuchtdioden 6.

Das Leuchtmittel 4 kann beispielsweise auch dauernd aktiviert sein (d.h. sowohl bei vorhandener Netzspannung als auch bei Ausfall der Netzspannung), wobei durch die höhere Helligkeit des Leuchtmittels 6 (aufgrund der höheren Anzahl an Leuchtdioden) dieses Leuchtmittel 6 die wahrgenommene Helligkeit liefert. In diesem Fall kann das Leuchtmittel 4 auch ein Leuchtmittel sein, welches nicht oft geschaltet oder in seiner Helligkeit geändert werden sollte. Der Wechsel der Helligkeit, welcher beispielsweise bei durch Feststellen einer Bewegung gewünscht wird, kann durch die Änderung der Ansteuerung des Leuchtmittels 6 erreicht werden.
Somit kann sich eine additive Gesamthelligkeit durch Betreiben beider Leuchtmittel 4 und 6 ergeben.

Auf diese Weise ist eine energieeffiziente Beleuchtung bei anliegender Netzspannung möglich, indem eine Grundhelligkeit gesichert ist (durch das Ansteuern der ersten Leuchtdiode 4), wenn niemand anwesend ist. Bei erfasster Anwesenheit wird eine höhere Helligkeit durch das Zuschalten der zweiten Leuchtdiode 6 erzielt.

Bei Ausfall der Netzspannung wird durch die Ansteuerung der ersten Leuchtdiode 4 ausgehend von der wiederaufladbaren Batterie die erforderliche Notbeleuchtung sichergestellt. Somit ergibt sich eine sichere und energieeffiziente Beleuchtung für Flure, Truppenhäuser, Büros, Garagen oder ähnliche Orte.

Eine weitere Möglichkeit der Erfindung ist, dass die Ansteuerung der Leuchtdioden 6 an das Schaltverhalten des Bewegungsmelders 1 angepasst wird. Dazu kann das am Netzanschluß des Betriebsgeräts 2b anliegende Signal statistisch ausgewertet werden.
In einer möglichen Ausführungsform wird erfasst und/oder ausgewertet, wie oft und in welchen Zeitabständen ein Netzspannung anliegt. Wird die Netzspannung von einem Bewegungsmelder 1 geliefert, so bedeutet dies, dass statistisch ausgewertet wird, wie oft und/oder in welchen Zeitabständen Bewegungen detektiert werden. Diese Information kann nun verwendet werden, um die Werte der Helligkeitsvorgabe für die Leuchtdioden 6 dynamisch an die jeweilige Situation anzupassen. Es können verschiedene Szenarien im Betriebsgerät 2b abgelegt sein und die Auswertung der Bewegungsmeldungen kann zur Wahl eines bestimmten Szenarios herangezogen werden.

Werden in einem bestimmten Zeitraum viele Bewegungen erfasst (das heißt der betreffende Raum ist stark frequentiert), so kann die Zeitdauer für den Wechsel auf den Nominalwert der Leistung verlängert werden. Zusätzlich oder alternativ kann auch der Betriebssollwert verändert (bspw. erhöht) werden.

Es kann auch ein Wechsel zwischen unterschiedlichen Szenarien erfolgen, das heißt beispielsweise, dass das Betriebsgerät 2b nicht mehr direkt in einem Schritt auf den Betriebssollwert wechselt, sondern zusätzlich zwischenzeitlich auf einem oder mehreren mittleren Helligkeitsstufen verweilt. Die mittleren Helligkeitsstufen können nahe dem Betriebssollwert gewählt werden. Durch diese Maßnahmen kann erreicht werden, dass der betreffende Raum in der Zeitperiode, während er stark frequentiert ist, sehr gut beleuchtet wird.

Über die Auswertung des Schaltverhaltens des Bewegungsmelders 1 kann auch erkannt werden, ob dieser eine Verzögerungszeit eingestellt hat. Es kann zudem abgeschätzt werden, wie groß diese Verzögerungszeit gegebenenfalls ist.

Ist der betreffende Raum weniger stark frequentiert, so kann das Szenario derart angepasst werden, dass der Betriebssollwert schneller erreicht wird, das heißt, dass die Zeitdauer für den Wechsel auf den Betriebssollwert verkürzt wird. Es kann natürlich auch das Szenario adaptiert werden.

In einer weiteren vorteilhaften Ausführungsvariante kann das Szenario (die Helligkeitsparameter) an die Tageszeit (Tagesperiode) angepasst werden. So können verschiedene Szenarien im Betriebsgerät 2b abgelegt sein, und je nach Tageszeit ein anderes Szenario verwendet und / oder ausgewählt werden.

In einer weiteren Ausführungsform kann eine Ermittlung der Tageszeit anhand der Erfassung der Steuersignale erfolgen. Es kann vorgesehen sein, dass das Betriebsgerät 2b anhand der statistischen Auswertung der Bewegungsmeldungen Muster oder Eigenschaften erkennt, die sich in einem täglichen Rhythmus wiederholen und so Rückschlüsse auf die Tageszeit (Tagesperiode) erlauben. Diese Erfassung der Tageszeit kann auch durch eine Messung der Helligkeit bspw. mit Hilfe eines Lichtsensors ergänzt werden.

Abhängig von der erfassten Tageszeit, der Tagesperiode oder auch der statistischen Auswertung der Bewegungsmeldungen können die Leuchtdioden 6 unterschiedlich hell angesteuert werden. Beispielsweise kann bei einer hohen Anzahl von erfassten Bewegungen vorzugsweise das Leuchtmittel 6 mit hoher Helligkeit betrieben und angesteuert werden, während bei geringer Schalthäufigkeit das Leuchtmittel 6 mit geringerer Helligkeit angesteuert werden kann. Es kann aber auch ein Helligkeitssensor an das Betriebsgerät 2b angeschlossen sein (beispielsweise über eine Schnittstelle D1, D2 oder D3, D4) und die Helligkeit der angeschlossenen Leuchtdiode 6 vom Signal des Helligkeitssensors abhängen.

Die Ansteuerung des Betriebsgerätes 2b kann auch über ein Relais einer zentralen Steuerung oder beispielsweise in Abhängigkeit einer anderen Anwesenheitserfassung wie einer Türüberwachung erfolgen.

Die Einstellung der Helligkeitswerte (z.B. der Betriebssollwert) und der Helligkeitsparameter des Szenarios kann beispielsweise über eine Schnittstelle (D1, D2 oder D3, D4) erfolgen. Diese Programmierung kann im Betrieb, während der Installation, während der Fertigung etc ausgeführt werden.
Die Schnittstelle zur Programmierung kann auch drahtlos ausgebildet sein.

Das Beleuchtungssystem (10) kann gemäß der Erfindung auch derart aufgebaut sein, dass die Ansteuerung von wenigstens zwei verschiedene Leuchtmitteln (4, 6) durch wenigstens zwei Betriebsgeräte (2a, 2b), die jeweils ein Leuchtmittel (4, 6) betreiben, erfolgt.

Die Betriebsgeräte (2a, 2b) können zumindest je eine Schnittstelle (D3, D4) aufweisen, die miteinander verbunden sind, und wenigstens ein erstes Betriebsgerät (2a oder 2b) kann eine weitere Schnittstelle (D1, D2) aufweisen. Über die miteinander verbundenen Schnittstellen (D3, D4) kann eine unidirektionale oder bidirektionale Kommunikation zwischen den Betriebsgeräten (2, 2') ermöglicht werden.

Das erste Betriebsgerät (2a) kann das erste Leuchtmittel (4) betreiben und das zweite Betriebsgerät (2b) kann beispielsweise das weitere Leuchtmittel (6) betreiben. Ein erstes Betriebsgerät (2a) kann bei Empfang eines über eine weitere Schnittstelle (D1, D2) zugeführten Signals auch eine Kommunikation mit dem zweiten Betriebsgerät (2b) durchführen. Das zweite Betriebsgerät (2b) kann bei Empfang eines über eine weitere Schnittstelle (D1, D2) zugeführten Signals auf eine Kommunikation (über die die miteinander verbundenen Schnittstellen D3, D4) mit dem ersten Betriebsgerät (2a) reagieren.

Das erste Betriebsgerät (2a) kann zusätzlich abhängig von dem über eine weitere Schnittstelle (D1, D2) zugeführten Signal das angeschlossene Leuchtmittel (4) ansteuern. Das erste Betriebsgerät (2a) kann abhängig von der erfolgten Kommunikation mit dem zweiten Betriebsgerät (2b) das angeschlossene Leuchtmittel (4) ansteuern. Vorzugsweise erfolgt die Ansteuerung des angeschlossenen Leuchtmittels (4) abhängig von der über die miteinander verbundenen Schnittstellen (D3, D4) ausgesendeten Information, gegebenenfalls kann das erste Betriebsgerät bei einer bidirektionalen Kommunikation auch auf Signale des zweiten Betriebsgeräts (2b) reagieren.

Im Folgenden solle ein exemplarisches Beispiel für ein Beleuchtungssystem mit mindestens zwei Leuchtdioden 4, 6 gemäß der Erfindung beschrieben werden.
Die Leuchtdioden 4 und 6 sind vorzugsweise auf einem Trägerelement 5 angeordnet. Es sind also vorzugsweise beide Leuchtdioden 4 und 6 auf einem gemeinsamen Trägerelement angeordnet. Anstelle einer Leuchtdiode 6 können aber auch mehrere dicht nebeneinander platzierte Leuchtdioden einen Lichtpunkt bilden. Es ist auch möglich, verschiedenfarbige Leuchtdioden nebeneinander anzuordnen. Es können auch mehrere in Serie und / oder parallel angeordnete Leuchtdioden anstelle der Leuchtdiode 6 angeordnet sein. Weiterhin ist eine zweite Leuchtdiode 4 auf dem Trägerelement angeordnet. Anstelle einer zweiten Leuchtdiode 4 können aber auch mehrere dicht nebeneinander platzierte Leuchtdioden einen Lichtpunkt bilden. Es ist auch möglich, verschiedenfarbige Leuchtdioden nebeneinander anzuordnen. Es können auch mehrere in Serie und / oder parallel angeordnete Leuchtdioden anstelle der zweiten Leuchtdiode 4 angeordnet sein.

Das Trägerelement kann beispielsweise eine runde oder auch eckige, vorzugsweise achteckige, Form aufweisen.
Das Trägerelement 5 ist beispielsweise in einem Gehäuse mit einem Gehäuseunterteil angeordnet. Das Gehäuse kann beispielsweise Vorrichtungen (Schlitz oder Bohrung) zum Befestigen aufweisen. Ein Gehäuseoberteil kann als eine gemeinsame Linse und/ oder Abdeckung über den Leuchtdioden 4, 6 angebracht sein.

Vorzugsweise werden als Leuchtdioden 4, 6 weiße Leuchtdioden, bspw. in Form von farbstoffkonvertierten Leuchtdioden oder eine Kombination von RGB-Leuchtdioden verwendet.

Wenn die Leuchtdioden 4, 6 mittels COB-Technologie (Chipon-Board) bestückt werden, dann können die Leuchtdioden 4, 6 jeweils durch einen sogenannten Globetop abgedeckt werden, der auch eine Linse bilden kann. Die Leuchtdioden 4, 6 können aber beispielsweise auch mittels SMD-Technologie auf dem Trägerelement 5 angebracht werden. Wenn ein Leuchtstoff über den Leuchtdioden 4, 6 angeordnet ist, kann dieser auch als Schicht über den Leuchtdioden 4, 6 aufgetragen oder auch beabstandet angeordnet sein.

Auf dem Trägerelement 5 können die elektrischen Zuleitungen für die Leuchtdioden 4,6 aufgebracht sein. In oder auf dem Trägerelement 5 kann zumindest ein Teil der Ansteuerelektronik für die Leuchtdioden 4,6 integriert oder angeordnet sein, beispielsweise eine Konstantstromquelle.

Auf dem Trägerelement können unabhängige Anschlüssen für jeweils die erste Leuchtdiode 4 und die zweite Leuchtdiode 6 vorhanden sein.

Somit kann beispielsweise ein Beleuchtungssystem zur Fluchtwegbeleuchtung gemäß der Erfindung gebildet werden, wobei eine Beleuchtung sowohl im Notlichtfall als auch im Normalbetrieb entsprechend den Anforderungen aber mit möglichst geringem Energieverbrauch möglich ist.

Zusammengefasst offenbart die Erfindung eine verbesserte Ansteuerung von zwei Leuchtmitteln (4, 6) durch zumindest zwei Betriebsgeräte 2a und 2b, die sich dadurch auszeichnet, dass es sich flexibel und dynamisch an unterschiedliche Situationen anpassen kann.

Vorzugsweise können Leuchtdioden als Leuchtmittel angewendet werden. Auf diese Weise ist ein schnelles Umschalten sowie ein energieeffizienter Betrieb in allen Betriebssituationen möglich. Vorzugsweise sind beide Leuchtdioden 4, 6 bzw. Gruppen von Leuchtdioden auf einem gemeinsamen Trägerelement angeordnet. Es ist aber auch möglich, die erste Leuchtdiode 4 und die zweite Leuchtdiode 6 jeweils auf einem separaten Trägerelement anzuordnen. Diese Erfindung könnte auch unter Einsatz von alternativen Leuchtmitteln angewendet werden, bspw. könnte das zweite Leuchtmittel auch durch eine Leuchtstofflampe gebildet werden.

## Patentansprüche

1. Verfahren zur Ansteuerung von einem Leuchtmittel, wobei
- das Leuchtmittel zumindest zwei unabhängig voneinander ansteuerbare Leuchtdioden (4, 6) aufweist,
- die zwei unabhängig voneinander ansteuerbaren Leuchtdioden (4, 6) von jeweils einem Betriebsgerät (2a, 2b) betrieben werden,
- eine erste Leuchtdiode (4) im Falle eines Netzspannungsausfalls durch das erste Betriebsgerät (2a) ausgehend von einer wiederaufladbaren Batterie angesteuert wird,
- wobei die zweite Leuchtdiode (6) von dem zweiten Betriebsgerät (2b) angesteuert wird, wenn das zweite Betriebsgerät (2b) durch einen schaltbaren Bewegungsmelder mit der Netzspannungsversorgung verbunden wird, **gekennzeichnet dadurch, dass**
der schaltbare Bewegungsmelder das zweite Betriebsgerät (2b) mittels eines Relais oder eines Halbleiterschalters mit der Netzspannungsversorgung verbindet.

2. Beleuchtungssystem (10) zur Ansteuerung von einem Leuchtmittel, wobei
- das Leuchtmittel zumindest zwei unabhängig voneinander ansteuerbare Leuchtdioden (4, 6) aufweist,
- die zwei unabhängig voneinander ansteuerbaren Leuchtdioden (4, 6) von jeweils einem Betriebsgerät (2a, 2b) betrieben werden,
- das erste Betriebsgerät (2a) über eine wiederaufladbare Batterie verfügt und zumindest im Falle eines Netzspannungsausfalls eine Leuchtdiode (4) ansteuert,
- wobei das zweite Betriebsgerät (2b) über einen schaltbaren Bewegungsmelder mit der Netzspannungsversorgung verbunden ist,
**gekennzeichnet dadurch, dass**
der schaltbare Bewegungsmelder das zweite Betriebsgerät (2b) mittels eines Relais oder eines Halbleiterschalters mit der Netzspannungsversorgung verbindet.

3. Beleuchtungssystem (10) nach Anspruch 2, **gekennzeichnet dadurch, dass** das erste Betriebsgerät (2a) die Leuchtdiode (4) auch bei Anliegen einer Netzspannung ansteuert.

4. Beleuchtungssystem (10) nach Anspruch 2 oder 3, **gekennzeichnet dadurch, dass** das erste Betriebsgerät (2a) wenigstens eine Schnittstelle (D1, D2) aufweist und über die Schnittstelle (D1, D2) digitale Signale und / oder Tastersignale empfangen werden können.

5. Beleuchtungssystem (10) nach Anspruch 5, **gekennzeichnet dadurch, dass** das erste Betriebsgerät (2a) abhängig von dem über eine weitere Schnittstelle (D3, D4) zugeführten Signal die angeschlossene Leuchtdiode (4) ansteuert.

6. Beleuchtungssystem (10) nach einem der vorangehenden Ansprüche, **gekennzeichnet dadurch, dass** sich bei dem ersten Leuchtmittel (4) um eine organische oder anorganische Leuchtdiode (LED) und bei einem zweiten Leuchtmittel (6) um organische oder anorganische Leuchtdiode (LED)handelt.

7. Beleuchtungssystem (10) nach einem der vorangehenden Ansprüche, **gekennzeichnet dadurch, dass** die beiden Leuchtdioden (4, 6) innerhalb einer Leuchte angeordnet sind.

8. Beleuchtungssystem (10) nach einem der vorangehenden Ansprüche, **gekennzeichnet dadurch, dass** die beiden Leuchtdioden (4, 6) auf einem gemeinsamen Trägerelement angeordnet sind.

## Claims

1. Method for controlling an illuminant, wherein
- the illuminant has at least two independently controllable light-emitting diodes (4, 6),
- the two independently controllable light-emitting diodes (4, 6) are operated by a respective operating device (2a, 2b),
- in the event of a mains voltage failure, a first light-emitting diode (4) is controlled by the first operating device (2a) on the basis of a rechargeable battery,
- wherein the second light-emitting diode (6) is controlled by the second operating device (2b) if the second operating device (2b) is connected to the mains voltage supply by a switchable motion detector,
**characterized in that**
- the switchable motion detector connects the second operating device (2b) to the mains voltage supply by means of a relay or a semiconductor switch.

2. Lighting system (10) for controlling an illuminant, wherein
- the illuminant has at least two independently controllable light-emitting diodes (4, 6),
- the two independently controllable light-emitting diodes (4, 6) are operated by a respective operating device (2a, 2b),
- the first operating device (2a) has a rechargeable battery and controls a light-emitting diode (4) at least in the event of a mains voltage failure,
- wherein the second operating device (2b) is connected to the mains voltage supply via a switchable motion detector,
**characterized in that**
the switchable motion detector connects the second operating device (2b) to the mains voltage supply by means of a relay or a semiconductor switch.

3. Lighting system (10) according to Claim 2, **characterized in that** the first operating device (2a) controls the light-emitting diode (4) even if a mains voltage is applied.

4. Lighting system (10) according to Claim 2 or 3, **characterized in that** the first operating device (2a) has at least one interface (D1, D2), and digital signals and/or sensor signals can be received via the interface (D1, D2).

5. Lighting system (10) according to Claim 5, **characterized in that** the first operating device (2a) controls the connected light-emitting diode (4) as a function of the signal supplied via a further interface (D3, D4).

6. Lighting system (10) according to any one of the preceding claims, **characterized in that** the first illuminant (4) is an organic or inorganic light-emitting diode (LED) and a second illuminant (6) is an organic or inorganic light-emitting diode (LED).

7. Lighting system (10) according to any one of the preceding claims, **characterized in that** the two light-emitting diodes (4, 6) are arranged within a luminaire.

8. Lighting system (10) according to any one of the preceding claims, **characterized in that** the two light-emitting diodes (4, 6) are arranged on a common carrier element.

## Revendications

1. Procédé d'activation d'une source lumineuse, dans lequel
- la source lumineuse présente au moins deux diodes électroluminescentes (4, 6) activées indépendamment l'une de l'autre,
- les deux diodes électroluminescentes (4, 6) activées indépendamment l'une de l'autre sont chacune activées par un appareil de commande de fonctionnement (2a, 2b),
- une première diode électroluminescente (4) est activée par le premier appareil de commande de fonctionnement (2a) à partir d'une batterie rechargeable en cas de panne de réseau,
- la deuxième diode électroluminescente (6) est activée par le deuxième appareil de commande de fonctionnement (2b), lorsque le deuxième appareil de commande de fonctionnement (2b) est relié à l'alimentation réseau par l'intermédiaire d'un détecteur de mouvement commutable, **caractérisé en ce que**
- le détecteur de mouvement commutable relie le deuxième appareil de commande de fonctionnement (2b) au moyen d'un relais ou d'un commutateur à semi-conducteurs à l'alimentation réseau.

2. Système d'éclairage (10) pour l'activation d'une source lumineuse, dans lequel
- la source lumineuse présente au moins deux diodes électroluminescentes (4, 6) activées indépendamment l'une de l'autre,
- les deux diodes électroluminescentes (4, 6) activées indépendamment l'une de l'autre sont chacune activées par un appareil de commande de fonctionnement (2a, 2b),
- le premier appareil de commande de fonctionnement (2a) dispose d'une batterie rechargeable et active, au moins en cas d'une panne de réseau, une diode électroluminescente (4),
- dans lequel le deuxième appareil de commande de fonctionnement (2b) est relié à l'alimentation réseau par l'intermédiaire d'un détecteur de mouvement commutable,
**caractérisé en ce que**
le détecteur de mouvement commutable relie le deuxième appareil de commande de fonctionnement (2b) au moyen d'un relais ou d'un commutateur à semi-conducteurs à l'alimentation réseau.

3. Système d'éclairage (10) selon la revendication 2, **caractérisé en ce que** le premier appareil de commande de fonctionnement (2a) active les diodes électroluminescentes (4) également en présence d'une tension de réseau.

4. Système d'éclairage (10) selon la revendication 2 ou 3, **caractérisé en ce que** le premier appareil de commande de fonctionnement (2a) présente au moins une interface (D1, D2) et, par l'intermédiaire de l'interface (D1, D2), des signaux numériques et/ou des signaux de poussoirs peuvent être reçus.

5. Système d'éclairage (10) selon la revendication 5, **caractérisé en ce que** le premier appareil de commande de fonctionnement (2a) active les diodes électroluminescentes (4) raccordées en fonction du signal transmis par une autre interface (D3, D4).

6. Système d'éclairage (10) selon l'une quelconque des revendications précédentes, **caractérisé en ce que** la première source lumineuse (4) est une diode électroluminescente (LED) organique ou inorganique et la deuxième source lumineuse (6) est une diode électroluminescente (LED) organique ou inorganique.

7. Système d'éclairage (10) selon l'une quelconque des revendications précédentes, **caractérisé en ce que** les deux diodes électroluminescentes (4, 6) sont disposées à l'intérieur d'une lampe.

8. Système d'éclairage (10) selon l'une quelconque des revendications précédentes, **caractérisé en ce que** les deux diodes électroluminescentes (4, 6) sont disposées sur un élément support commun.
